# EUROPEAN PATENT SPECIFICATION

(11) **EP 3 390 875 B1**
(45) Date of publication and mention of the grant of the patent: **23.09.2020**
(21) Application number: 16815835.0
(22) Date of filing: 16.12.2016
(51) Int. Cl.: F16K 35/06, F16K 1/22, F16K 27/02

(54) **VALVE FOR BAG-IN-BOX SYSTEM OR A STEEL TANK SYSTEM**
VENTIL FÜR EIN SYSTEM MIT SCHACHTEL MIT INNENBEUTEL ODER STAHLTANKSYSTEM
ROBINET POUR SYSTÈME DE CAISSE-OUTRE OU SYSTÈME DE RÉSERVOIR EN ACIER

(30) Priority: 17.12.2015 SE 1551667
(43) Date of publication of application: 24.10.2018
(73) Proprietor: B-in-Btech AB, 269 42 Båstad (SE)
(72) Inventor: NILSSON, Jonas, 269 42 Båstad (SE); KNUTSSON, Anders, 296 35 Åhus (SE)
(74) Representative: Ström & Gulliksson AB
(86) International application number: PCT/EP2016/081504
(87) International publication number: WO 2017/103154

(56) References cited:
- EP-A1- 1 922 201
- EP-A1- 2 947 362
- EP-A2- 0 101 217
- CN-A- 102 285 487
- CN-U- 202 987 756
- US-A1- 2010 084 049
- US-A1- 2010 126 622

## Description

### Field of the Invention

This invention pertains in general to a valve suitable for a bag-in-box or steel tank system and more specifically to a system that contains, liquid, food or cosmetics.

### Background of the Invention

The storage, transfer and usage in production system of liquids, food or cosmetics can be achieved with the use of flexible liner bags contained within a substantially rigid outer box. Such systems are generally known in the art as 'bag-in-box' systems. Another known system to use is a steel tank system.

For example, a typical bag-in-box system comprises a liner bag which can be filled and discharged. In some cases the bag-in-box system is aseptic, in which case the filling and/or the discharging can occur without the introduction of oxygen. The filling and discharging of the liner bag are achieved via a valve, or valve assembly, provided to the bag. Sometimes, the filling and discharging can occur via different valves or openings. For example, the bag can be filled by a valve or fitment arranged in an upper region of the liner bag, whilst the emptying can occur via a valve arranged at a bottom region of the bag. The temperature of the cosmetic, food or liquid supplied to the liner bag via the valve can differ greatly depending on the type of cosmetic, liquid or food to be used. The valve and/or the bag may also be sterilised or cleaned prior to or after use with gamma radiation or steam. Steam sterilisation necessitates that the valves are capable of withstanding high temperatures.

EP 1 922 201 B1 discloses a manufacturing method for a butterfly valve being suitable for use in bag-in-box systems. One problem with such a valve is that it is relatively expensive to produce such a valve in a polymer safe for contacting food at a range of temperatures. Other butterfly valves are known from documents US 2010/084049 A1, US 2010/126622 A1 or EP 2 947 362 A1.

Hence, an improved valve would be advantageous and in particular a valve being reliable, cost-effective and safe for use even when subject to different temperatures, pressures or other physical conditions.

### Summary of Invention

Accordingly, the present invention preferably seeks to mitigate, alleviate or eliminate one or more of the above-identified deficiencies in the art and disadvantages singly or in any combination and solves at least the above mentioned problems by, in one aspect, providing a valve for a bag-in-box or a steel tank system having a separate main body with a through hole, a valve member which is configured to move between an open state and a closed state, and a valve seat against which the valve member is configured to create a sealing in the closed state. Further, the valve has a handle unit connected to the valve member and configured to move the valve member back and forth between the open state and the closed state. The valve member and the valve seat are arranged within the through hole of the main body. Further, the handle unit is locked to the valve member in a direction perpendicular to the extension of the through hole.

In an embodiment the handle unit includes a handle shaft which, in an assembled state, is configured to extend through a centre cavity of the valve member.

In another embodiment the valve further includes a handle locking unit configured to lock the handle unit. In some application of the valve it is preferred or even necessary to provide a valve with excellent sealing properties. Therefore it is desired to have a handle unit which is not movable in any undesired direction.

In a preferred embodiment the handle locking unit comprises a locking portion which protrudes in a direction perpendicular to the extension of a handle shaft of the handle unit.

Further, in yet another embodiment the handle locking unit consist of two semi-circle halves which are shaped to at least partly surround the main body. This makes it easy for an operator to assemble the handle locking unit to the valve.

In another embodiment the main body comprises a flow pipe surrounding the through hole and extending perpendicular from a backing plate of the main body.

In a preferred embodiment the handle locking unit is configured to at least partly surround parts of the flow pipe in an assembled state.

Yet further, the flow pipe may be connected to or integrated with a threaded section which is configured to be connected to a filling or discharge coupling.

In another aspect there is provided bag-in-box system having a valve described above.

In yet another aspect there is provided a method for assembling a handle locking unit to a valve, where the handle locking arrangement is configured to lock a handle unit to the valve and where the handle locking arrangement includes a locking portion which protrudes in a direction perpendicular to the extension of a handle shaft of the handle unit, and two semi-circle halves which are shaped to at least partly surround the main body, having the steps of:
- connecting the two halves of the handle locking unit,
- moving the handle locking unit on to the main body,
- closing the two halves of the handle locking unit completely,
- placing the handle shaft in its intended location, and
- pushing the handle locking unit towards the handle shaft until the handle locking unit has locked the handle unit in its position.

### Brief Description of the Drawings

These and other aspects, features and advantages of which the invention is capable of will be apparent and elucidated from the following description of embodiments of the present invention, reference being made to the accompanying drawings, in which
Fig. 1 is an exploded perspective view of a valve according to an embodiment of the invention,
Fig. 2 is an isometric perspective view of a front connector according to an embodiment of the invention.
Fig. 3a is a perspective top-view of the front connector,
Fig. 3b is a perspective front-view of the front connector,
Fig. 3c is a perspective side-view of the front connector,
Fig. 4 is an isometric perspective view of a main body according to an embodiment of the invention.
Fig. 5 is a perspective top-view of the main body,
Fig. 6 is an exploded perspective view of a valve mechanism according to an embodiment of the invention.
Fig. 7a is an isometric perspective view of the outside of a lid according to an embodiment of the invention.
Fig. 7b is an isometric perspective view of the inside of the lid,
Fig. 7c is a perspective rear-view of the lid, showing the inside,
Fig. 7d is a perspective top-view of the lid,
Fig. 8a is an isometric perspective view of a tamper proof latch according to an embodiment of the invention,
Fig. 8b is a perspective side-view of the tamper proof latch,
Fig. 9a is an isometric perspective view of a gland for a liner bag according to an embodiment of the invention,
Fig. 9b is a perspective side view of the gland,
Fig. 10 is a perspective front-view of a handle according to an embodiment of the invention,
Fig. 11 is an exploded perspective view of a valve according to another embodiment of the invention,
Fig. 12a is a perspective front view of a handle locking unit in a closed state according to an embodiment of the invention,
Fig. 12b is a perspective back view of the handle locking unit,
Fig. 13a is a back view of the handle locking unit in an assembled and open state,
Fig. 13b is a perspective back view of the handle locking unit in a disassembled state,
Fig. 13c is a detailed view of the locking arrangement in Fig. 13b,
Figs 14a-e show an assembling procedure of the handle locking unit and the rest of the valve, and
Figs 15a-b show a detailed perspective view of handle locking unit.

### Description of Embodiments

The following description of the present invention describes a valve 1, e.g. for a bag-in-box or a steel tank system comprising a front connector 100 and a separate main body 200 allowing for increased ease of manufacturing, assembly and operation.

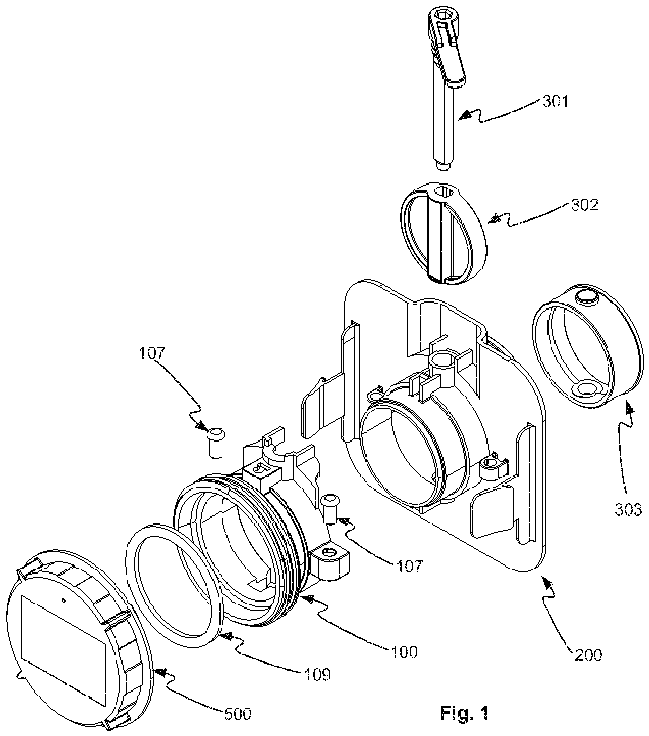

Figure 1 illustrates a valve 1 for a bag-in-box system comprising a front connector 100 for connecting, at a first end 102 to a filling or discharge coupling, and, at an opposing second end 104, to a separate main body 200. The valve 1 further comprises a valve member 302 and a valve seat 303, arrangeable within the main body 200. The separate main body 200 is connectable to a liner bag.

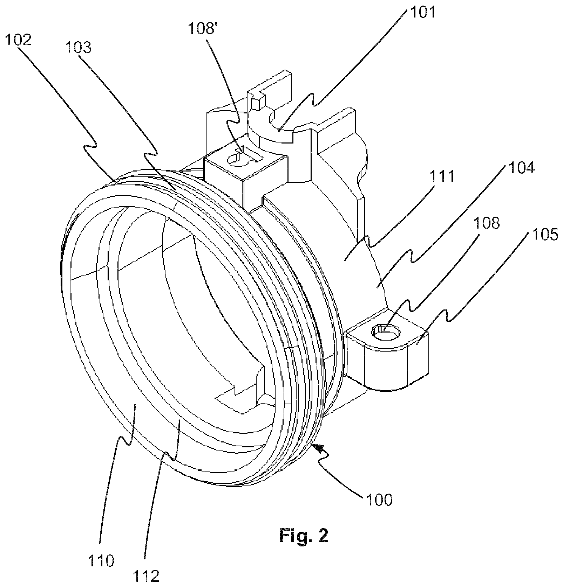

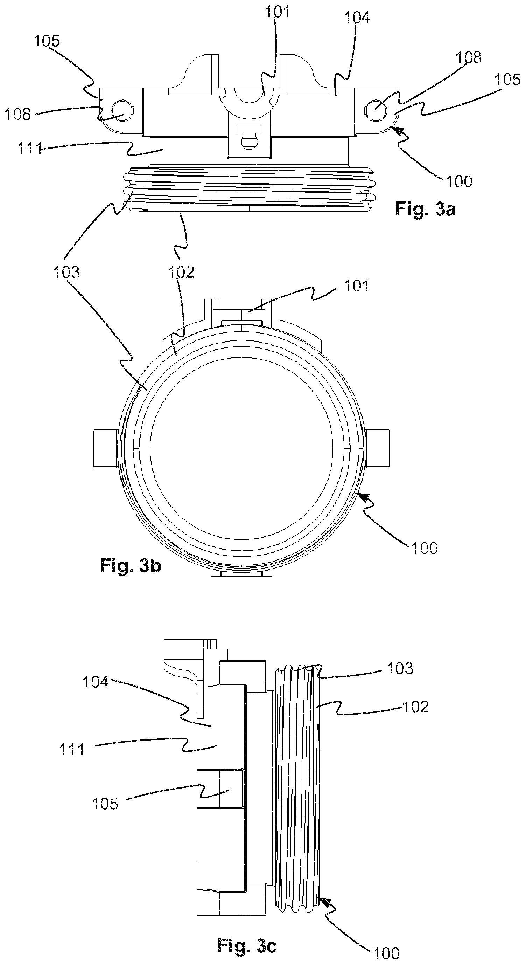

The front connector 100 is a substantially tubular member. The front connector 100 has an axis of extension extending from the first end 102 to the second end 104. The first end 102 is the end for connecting to a filling or discharge coupling. The second end 104 is the end being connectable to the separate main body 200. The front connector 100 is a substantially hollow part having a tubular internal surface 110 and an external surface 106. The first end 102 of the front connector 100 is provided with an external circumferential thread 103 for coupling to a filling or discharge member. The thread 103 may extend partially axially along the external surface 106 of the front connector 100. The second end 104 is provided with a means of releasably attaching the front connector 100 to the main body 200. The means of releasably attaching the front connector to the main body 200 must be capable of holding the front connector 100 to the main body 200 even when the filling or discharge system applies a significant force or internal pressure to the connection. For instance, as is shown in figures 1-3, the front connector 100 may be provided with at least one, such as two, laterally extending ears 105 provided with a through hole 108 arranged at the outer surface 106 of the front connector 100. The ears 105 maybe diametrically opposed. The through holes 106 of the ears 105, together with a member of the main body 200 can receive a pin 107 such that the front connector is held in place to the main body 200. The front connector is intended to form a coupling member between the valve 1 and the filling or discharge coupling and is designed to generally not form part of the fluid path.

As the front connector 100 is a separate part to the main body 200 the front connector 100 can comprise a different material to that of which the main body 200 is comprised. As the front connector 100 generally is in contact with metal coupling members used in cleaning, sterilisation, filling and discharge it is generally at an increased risk of damage due to high temperature than components not in direct contact with the hot metal parts. By separating the front connector 100 and the main body 200 it is possible to select a material for the front connector 100 without using the same material, which may have disadvantageous factors such as cost, for the main body 200. The front connector 100 may for example comprise, such as consist of, a first material being a heat resistant material, such as a heat resistant polymer, for example, reinforced polymers such as reinforced polypropylene, reinforced polyamide, thermoplastic polyesters or other high performance polymers. The front connector may comprise, such as consist of, a heat resistant polymer. For example, the front connector 100 may comprise, such as consist of, 30% glass reinforced polyamide 6. The main body 200 may comprise, such as consist of, a second material, being different to the first material.

As shown in figure 1 the valve 1 can be provided with a handle unit 301, from now on called a handle. The handle 301 can extend through the valve member 302. The handle 301 is held and locked by a locking shelf 101 provided on the front connector 100. The handle 301 is thus held within the valve 1 by the front connector 100 during valve opening and closing movements. The separate front connector 100 and main body 200 allows the handle to be inserted easily through the valve member 302 and then only held or locked in place when the front connector 100 is fixed to the main body 200. In traditional valves leakages can occur when the handle is moved upward during opening and closing movements. However, with this improved design leakages due to the handle being moved upwards are avoided.

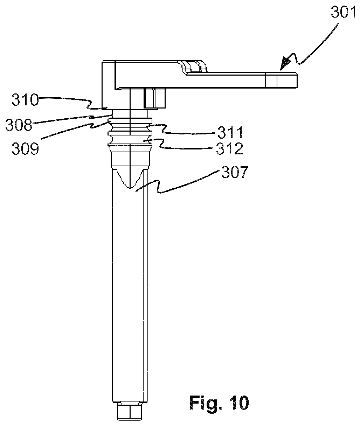

As shown in figures 1 to 3 the locking shelf 101 is a flat flange extending in a plane parallel with the axis of extension of the front connector 100. The locking shelf 101 is designed to fit around a handle shaft 307 (see figure 10) of the handle 301 such that the handle 301 is held and cannot be moved upwards out of the valve 1 or valve member 302. To this end the shaft 307 of the handle 301 may be provided with at least one region of reduced diameter 308 for receiving the locking shelf 101. The at least one region 308 has a reduced diameter in comparison to the main diameter of the shaft 307 or in comparison to regions 309, 310 having a diameter greater than the main diameter of the shaft 307. The region 308 may have a diameter less than both the main diameter of the shaft 307 and the regions 309,310. The locking shelf 101 maybe arranged at an upper region of the front connector 100 as is shown in Figure 1. Such that the locking shelf 101 can fit around the shaft of the handle 301 the locking shelf 101 may be provided with a semi-circular aperture such that the locking shelf 101 fits around the circular profile of the shaft 307. With the locking shelf 101 provided on a front connector 100 being separate to the main body 200 the handle 301 can be inserted to the valve 1 and then subsequently locked in place when the front connector 100 is assembled to the main body 200, allowing for easier assembly. The shaft 307 may be provided with at least one, such as two, regions for receiving o-rings 311, 312. The o-rings can form a fluid tight seal for the valve mechanism 300. The fluid tight seal may be formed at the main body 200.

The front connector 100 may be provided with a sealing gasket 109 dimensioned to fit within the internal surface 110 of the front connector 100. The internal surface 110 may be provided with an annular step 112, acting as a seat for the gasket 109. The gasket 109 may be made from a compliant material. The gasket may, for example, be made from a silicone rubber, ethylene propylene diene monomer rubber (EPDM), nitrile rubber (NBR) or a thermoplastic elastomer.

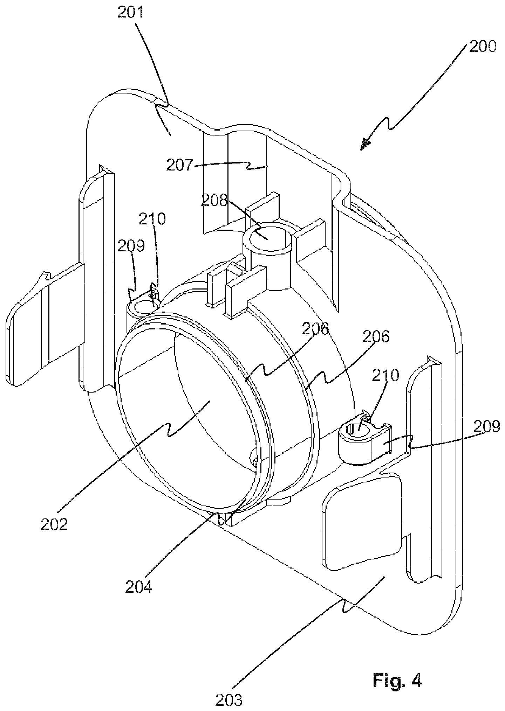

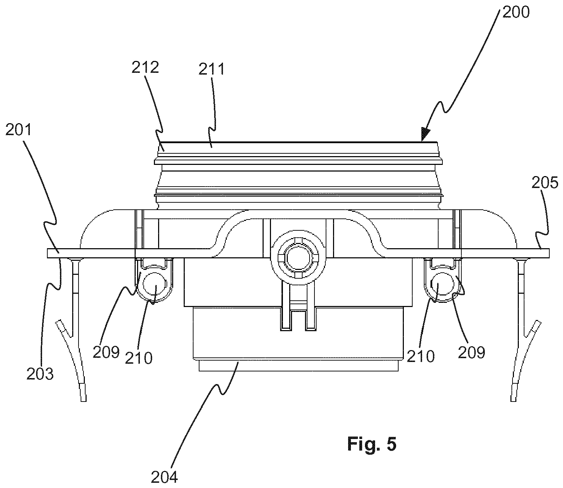

As can be seen in figures 4 to 5 the main body 200 comprises a, substantially planar, backing plate 201 provided with a through hole 202. Arranged annular to the through hole 202 and extending perpendicular to the main body 201, such as extending perpendicular to a first face 203 of the backing 201, is a flow pipe 204. The flow pipe 204 may extend from the first face 203.

The front connector 100 fits around the flow pipe 204 such that the two parts can be arranged together. The flow pipe 204 may be provided with an annular step 206 in its circumference such that the flow pipe 204 is effectively a larger diameter sleeve proximal to the main body 200 and a smaller diameter sleeve distal to the main body 200. This step 206 and change in diameters may allow for better coupling of the front connector 100 to the main body 200. The better coupling may further be achieved via the arrangement of and holding of a gasket at the step(s) 206 between the front connector 100 and the main body 200. The flow pipe 204 may comprise several steps, such as two steps. When the parts 100, 200 are connected, the flow pipe 204 extends into the front connector 100 such that fluid passing through the valve 1 does not come in contact with the front connector 100. This means that the food safety qualities of the material of which the front connector 100 comprises are not as important as in traditional bag-in-box valves. That is, the front connector 100 can comprise a material which is not considered food safe as it does not generally contact any cosmetics, food or fluids.

The main body 200 comprises a region 207 being depressed with respect to a face 203,205 of the backing 201. The region 207 may be provided with a hole 208 extending transversally to the central axis of the flow pipe 204. The hole is for receiving the handle 301. The main body 200 may be provided with at least one, such as two, receivable connectors 209 designed to match, such as fit within, the laterally extending ears 105 of the front connector 100. The receivable connectors may be U formed projections extending from the first face 203 of the backing 201 having a through hole 210 aligned with the through hole 106 of the laterally extending ears 105 of the front connector 100. The receivable connectors 209 may be diametrically opposed such that they match the ears 105 of the front connector 100. As described previously the matching connectors 105, 209 and through holes 106, 210 may receive a pin 107 such that the front connector 100 is held in place to the main body 200.

The main body 200 may also be provided with a connector 211 for connecting to a gland 700 on a liner bag (not shown). The connector 211 may be a continuation of the flow pipe 204 extending from the second face 205 of the backing 201. The connector 211 may comprise a ring 212 having a greater external diameter proximal to the backing plate 201, and a smaller external diameter in the region distal to the backing plate 201. The connector 211 may comprise more than one, such as two such rings 212. The ring(s) 212 provide for better connection between the valve 1 and the gland 700 of the liner bag.

The main body 200 may be manufactured from a food safe material, such as a food safe polymer material, such as a food safe polypropylene, polyethylene or ABS.

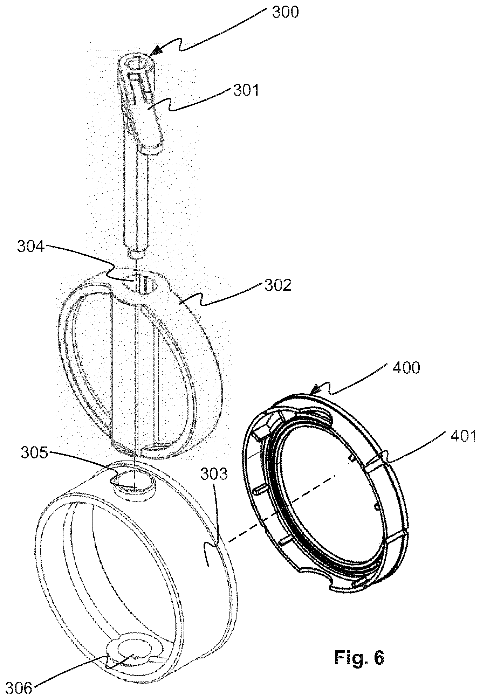

In Figure 6 components of a valve mechanism 300 are presented. The valve mechanism comprises a valve member 302, a valve seat 303 and a handle 301. In figure 6 the valve mechanism 300 presented is of the type of valve mechanism known as a butterfly valve 300. The butterfly valve 300 can be arranged centrally within the main body 200. The butterfly valve 300 comprises a handle 301, a disc 302 and a tubular gasket 303. The disc 302 is arranged in the centre of the gasket 303, passing through the valve member disc 302 is handle shaft 307 connected to an actuator, in form of a handle 301, on the outside of the valve mechanism 300. Rotating the actuator/handle 301 turns the disc 302 either parallel - in an open position - or perpendicular to the flow - in a closed position. In the closed position, the valve member disc 302 seals against the tubular gasket 303. This means that the tubular gasket 303 in function comprises and/or acts as a valve member seat. Unlike a ball valve, the disc 302 is always present within the flow, therefore a pressure drop is always induced in the flow, regardless of valve position. This means that turbulence is induced, resulting in airing of the liquid contained in the bag-in-box. This is specifically favourable when wine is contained in the bag-in-box. In operation, the valve 300 is fully open or closed when the disc 302 is rotated a quarter turn. When the valve is closed, the disc 302 is turned so that it completely blocks off the passageway. When the valve 300 is fully open, the disc 302 is rotated a quarter turn so that it allows an almost unrestricted passage of the fluid. The valve may also be opened incrementally to throttle flow, whereby turbulence may be continuously controlled. Thus, by means of the handle 301 the valve member 302 may be moved in any desired way possible, e.g. vertically, horizontally or rotated.

The disc 302 may be provided with a cavity 304 for receiving the handle 301. The handle 301 of the butterfly valve 300 may be arranged to extend through the disc 302. The handle 301 may extend through the diameter of the disc 302. The gasket 303 may be provided with at least one hole 305 through which the handle 301 can extend. The gasket 303 may be provided with two holes 305, 306, such that the gasket has two matching opposing holes and thus the orientation of the gasket 303 during assembly is less critical. The tubular gasket 303 may be arranged within the flow pipe 204 of the main body 200. The gasket 303 may be manufactured from a polymer, such as a food safe polymers or elastomers, for example, silicone rubber. The gasket may be held in place by a locking ring 400. The locking ring 400 can be fixed to the flow pipe 204 of the main body 200. The locking ring may be provided with annular radially protruding members 401 for ultrasonic welding of the locking ring 400 to the flow pipe 204 of the main body 200. As indicated above, the valve mechanism is not necessarily of the type butterfly valve.

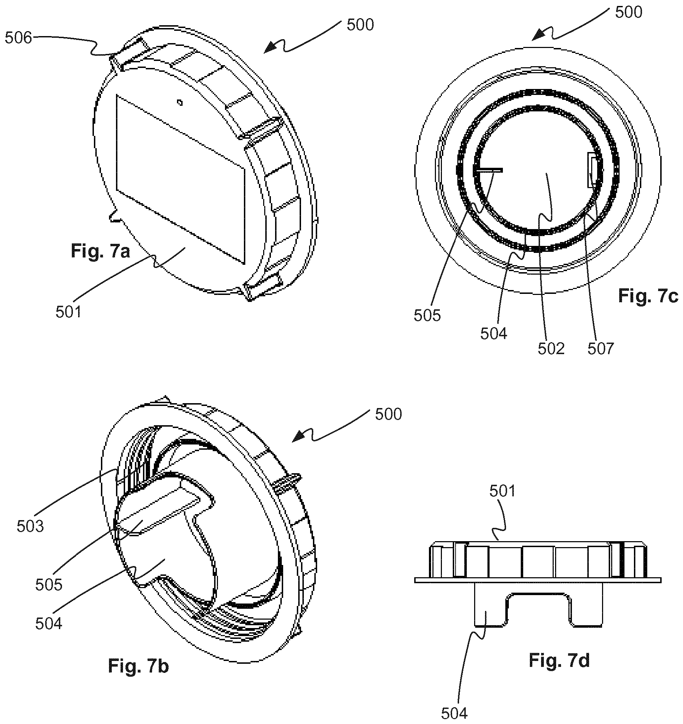

As is shown in Figure 7 the valve 1 may also be provided with a lid 500. The lid 500 is suitable for sealing the valve 1 during transport. The lid 500 has an outer face 501 and an inner face 502. An annular threaded region 503 can extend perpendicular and distal to the inner face 502. The inner face 502 of the lid 500 may be provided with an inner sleeve 504 extending distally from the inner face 502 and concentric to the threaded region 503. The lid 500 may be provided with a flange 505 extending perpendicular to the surface of the inner face 502, and directed radially inwardly from the inner face of the inner sleeve 504. When the lid is attached to the valve 1, or more specifically to the front connector 100 of the valve 1, the inner sleeve 504 or the flange 505 or both may extend into the range of motion of the valve member 302, such as into the range of motion of the disc 302 in the case where the valve is of the type butterfly valve 300. This blocks the valve member 302 from opening accidentally, during for example, transport.

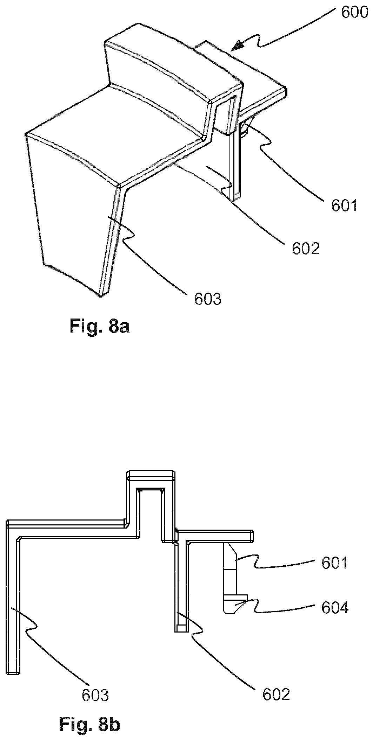

The valve 1 may also be provided with a tamper proof latch 600 as illustrated in Figure 8. The tamper proof latch 600 comprises an insertable male component 601 and two parallel opposed flanges 602, 603 for retaining the lid 500. The flange 602 proximal to the male component 601 may be arranged at the front connector 100, such as at the side of the thread 603 proximal to the second end 104. The flange 603 distal to the male component 601 may be arranged at the outer face 501 of the lid 500. The lid 500 is provided with a plurality of radial protrusions 506 that limit the movement of the lid 500 when the tamper proof latch 600 is in place. The protrusions 506, if the lid is turned whilst the tamper proof latch 600 is in place, contact and abut the latch, limiting movement. The tamper proof latch does not cover the face of the valve 1 or the lid 500. The tamper proof latch 600 may be receivable, prior to use, that is, during storage, in a compartment 507 on the inside of the lid 500. The compartment may be rectangular and extend perpendicular from the inner face of the inner sleeve 504. The insertable male component 601 fits within a receiving opening 108' provided on the front connector 100. The opening 108' may be keyhole formed. To lock the lid the insertable male component 601 may be provided with an edge 604 which is angled and deformable on insertion to the opening 108' such that the male component 601 may be easily inserted to the opening 108' but is not removable, and must be broken by deformation. The deformation and breaking of the tamper proof latch 600 can occur via the unscrewing of the lid 500. As the lid 500 is unscrewed from the front connector 100, the two parallel opposed flanges 602, 603 are forced apart. This is because the distance between the outer face of the lid 501 and the front connector 100 increases during unscrewing. At a specific distance, and therefore applied force, the two flanges 602, 603 are forced such that the tamper proof latch 600 breaks. The tamper proof latch 600 can be placed over the lid 500 such that the lid cannot be opened without breaking the tamper proof latch 600.

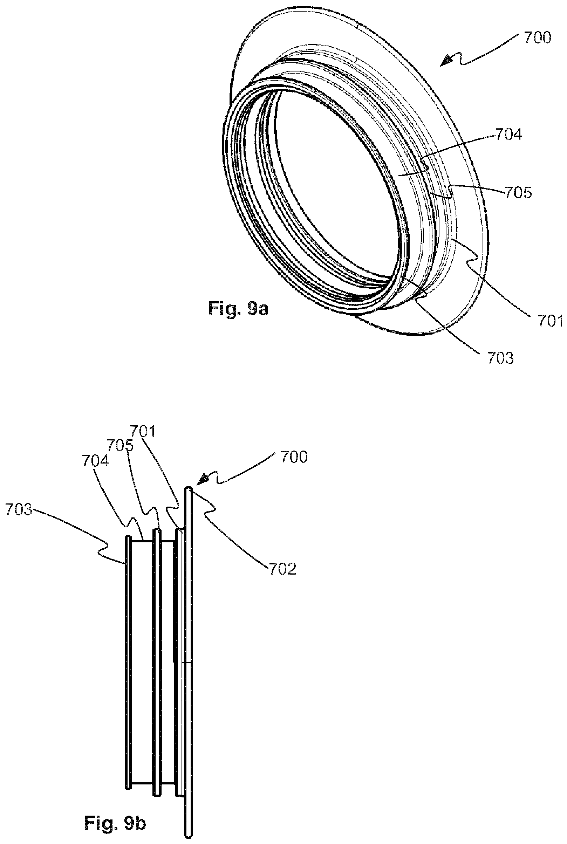

As illustrated in Figure 9 the liner bag (not shown) for use in the bag-in-box system is provided with a gland 700 for interfacing the liner bag with the valve 1. The gland may be a cylindrical member having a proximal end 701 provided with a flange 702 extending perpendicular to the longitudinal axis of the cylinder and a distal end 703 receivable in at least one of the main body 200, locking ring 400, valve mechanism 300 and/or front connector 100. Between the distal end 703 and the proximal end 701 the wall 704 of the gland is cylindrical and may be provided with at least one, such as a plurality, of raised annular ridges 705 for improving the interface between the gland 700 and the member to which it is received. The gland 700 may be fixed to the liner bag, for example, via welding.

Returning to Figure 1 the path of fluid or any other substance in the liner bag through the valve 1 will now be described. Fluid entering the valve 1 through a filling or discharge coupling connected to the front connector 100 at the thread 103 will first contact the sealing gasket 109, fluid will then contact the flow pipe 204 of the main body 200 and will generally not contact a part of the front connector 100. Fluid will subsequently contact the valve seat 303 and the valve member 302. If the valve member 302 is open then the fluid will pass the valve member 302 and continue through the flow pipe 204. The fluid may contact the locking ring 400 before entering the liner bag via the gland 700.

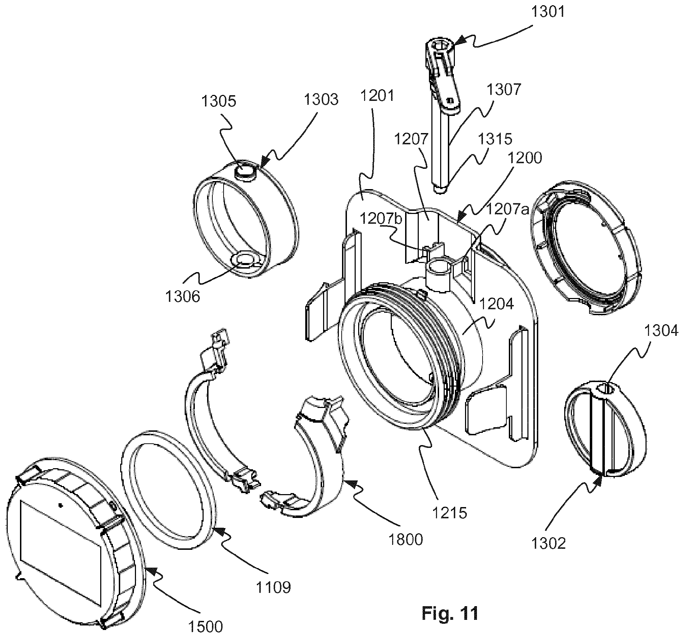

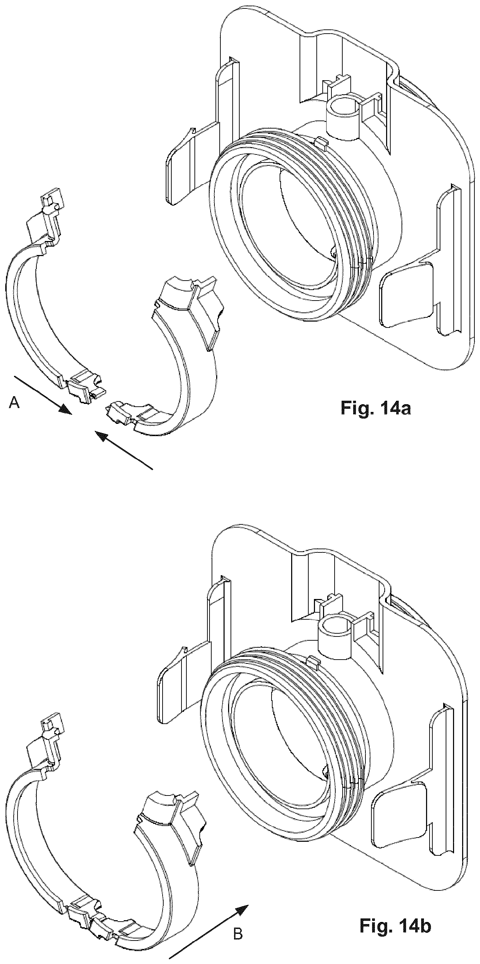

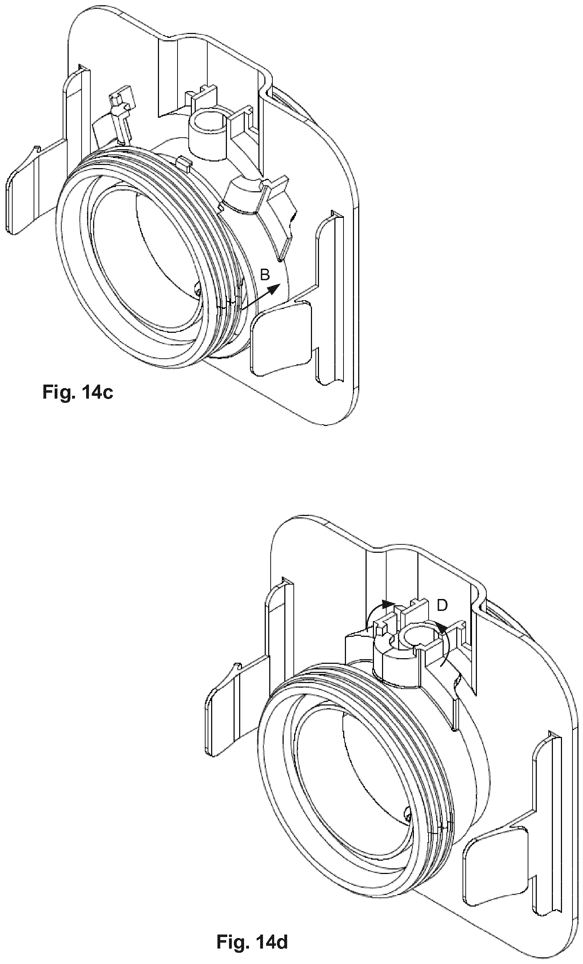

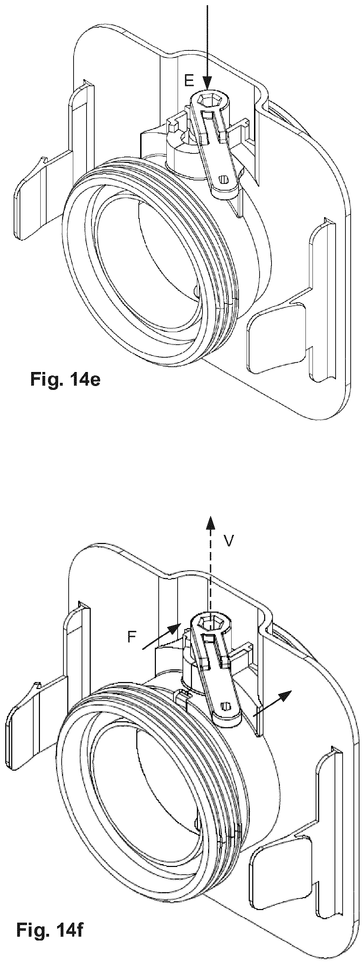

Figs 11-17 describe yet another embodiment of the valve, where the valve is provided with a main body that includes a threaded section from connecting to a filling or discharge coupling. In order to still achieve the same sealing, thus reducing the risk of leakage, and locking as with the embodiment described above the valve is also provided with a handle locking unit 1800. The rest of the elements of the valve, e.g. the handle unit 1301, the valve member 1302 and the valve seat 1303 are preferably the same as in the above described embodiments. The application of the handle locking unit 1800 is when it is even more important that the handle unit 1301 is not able to move in any direction during use. Often the valve and thus the handle unit 1301 are in a position where a user has to lean forward when operating the valve. This means that at least an unintended vertical force V, see Fig. 14f, is applied to the handle unit 1301 which can lead to displacements of the handle. Even the smallest displacement can have an effect on the cosmetics, liquid or food stored in the bag-in-box system, e.g. when the cosmetics, liquid or food requires an aseptic environment. The threaded section 1215 of the main body 1200 is located at an end portion of the flow pipe 1204 of the main body 1200 extending in a direction away from the backing plate 1201. In other embodiments it might be suitable to still have a separate front connector and main body but below the embodiment without a front connector is described.

The handle shaft 1307 of the handle unit 1301 extends through a through hole or a centre cavity 1304 of the valve member 1302, and preferably also through the holes 1305, 1306 of the valve seat 1303, just like in the previously described embodiment.

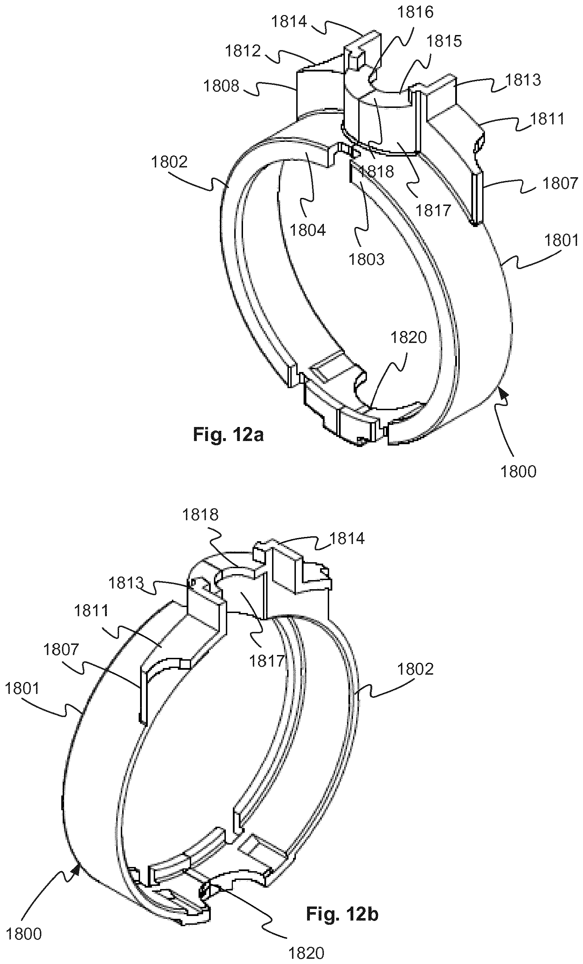

Fig. 11 shows the handle locking unit 1800 in a disassembled state whereas Figs 12a and 12b show the handle locking unit 1800 in an assembled and closed state. The handle locking unit 1800 includes two halves 1801, 1802. The two halves 1801, 1802 may be similar but this is not a requirement.

Each half 1801, 1802 is shaped as a semi-circle in order to at least partly surround, with their inner surfaces, the flow pipe 1204 of the main body 1200, between the threaded section 1215 and the backing plate 1201. At a first end 1803, 1804 of the semi-circle shaped half 1801, 1802 there is provided a protruding handle locking portion 1807, 1808, protruding from the outer surface of the half. The handle locking portion 1807, 1808 has a first, partly curved, part 1811, 1812 which is formed to fit the depressed region 1207 of the backing plate 1201 of the main body 1200. The handle locking portion further has a second part 1813, 1814 protruding above the first part. The second part 1813, 1814 is formed to engage a protruding flange 1207a, 1207b arranged within the depressed region 1207. The handle locking portion 1807, 1808 yet further includes a third part 1815, 1816 which is slightly immersed compared to the second part 1811, 1812. The third part 1815, 1816 has the form of a quarter of a circle such that when the two halves 1801, 1802 are connected, the two third parts 1815, 1816 form a semi-circle handle locking. The third part has an up-side-down L-shaped cross section such that the base 1817 protrudes radially from the outer surface of the half 1801, 1802 and the top 1818 (bottom of the L) protrudes perpendicular to the base 1817 in a direction towards the placement of the handle 1301. The third parts 1815, 1816 are in an assembled and locked state, which can be seen in Figs 12a and 12b, in contact with each other. The third parts 1815, 1816, in the assembled and locked state, form the semi-circle handle locking which holds the handle unit 1301 or the handle shaft 1307 in place during use of the valve.

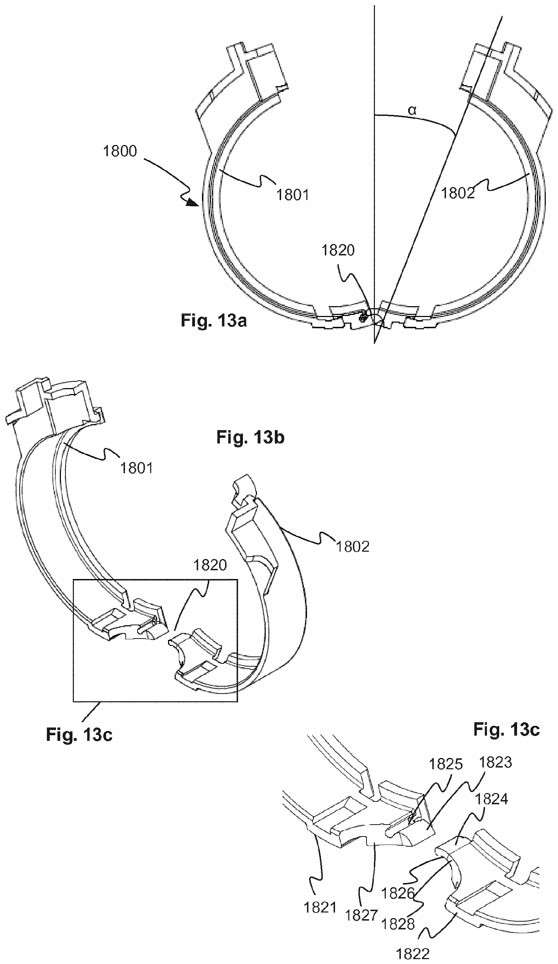

At a second end 1821, 1822 of the half 1801, 1802 there is provided an unit locking arrangement 1820 which is configured to lock the two halves together, for more detail see Figs 13a-c. The first half 1801 includes at its second end 1821 an end portion 1823 with a top curved surface. The curved surface leads down in a track 1825. The second half 1802 includes at its second end 1822 an end portion 1824 which is formed to be received in the track 1825 of the first half 1801. The end portion 1824 is shaped as a wave with a bottom curved surface 1826 that is shaped to fit the upper curved surface of the end portion 1823 of the first half. The unit locking arrangement 1820 is designed such that the end portion 1824 of the second half 1802 may be inserted into the track 1825 at an angle α of around 20°. At an angle clearly deviates from the 20° the end portion is either not able to be connected to or not able to be disconnected from the track 1825, i.e. when the handle locking unit is in its assembled and closed state, see Figs 12a-b, the unit locking arrangement can not be disconnected and unlocked. In other embodiments the angle α at which the halves of the unit locking arrangement is able to be connected or disconnected can be set to a various different angles, and is not therefore bound by the 20°.

Further, the end portions 1823, 1824 of each half 1801, 1802 has a recess 1827, 1828 which is shaped as a quarter of a circle. The two halves are connected by means of the unit locking arrangement where the two quarter circles form a semi-circle recess. This recess is shaped to receive a bottom end portion 1315 of the handle shaft 1307, when the handle shaft 1307 runs through the entire valve member 1302, see Figs 6 and 10.

The handle locking unit 1800 may be provided with a sealing gasket 1109 dimensioned to fit within the internal surface of the handle locking unit 1800. This sealing gasket 1109 is arranged between the internal surface of the handle locking unit 1800 and the outer surface of the flow pipe 1204 in the assembled state.

Figs 14a-f show how to assemble the handle locking unit 1800 to the valve according to one embodiment.
A: Connect the two halves of the handle locking unit,
B: Move the handle locking unit towards the main body of the valve,
C: Move the handle locking unit past the threaded section of the main body,
D: Close the two halves of the handle locking unit completely,
E: Place the handle and the handle shaft down to its intended location, and
F: Push the handle locking unit towards the handle shaft and the depressed region until the handle locking unit has locked the handle shaft in its position.

By using this handle locking unit the valve has been improved even more and by locking the handle shaft in, in this way, vertical forces V can be applied to the handle without moving it and causing problems.

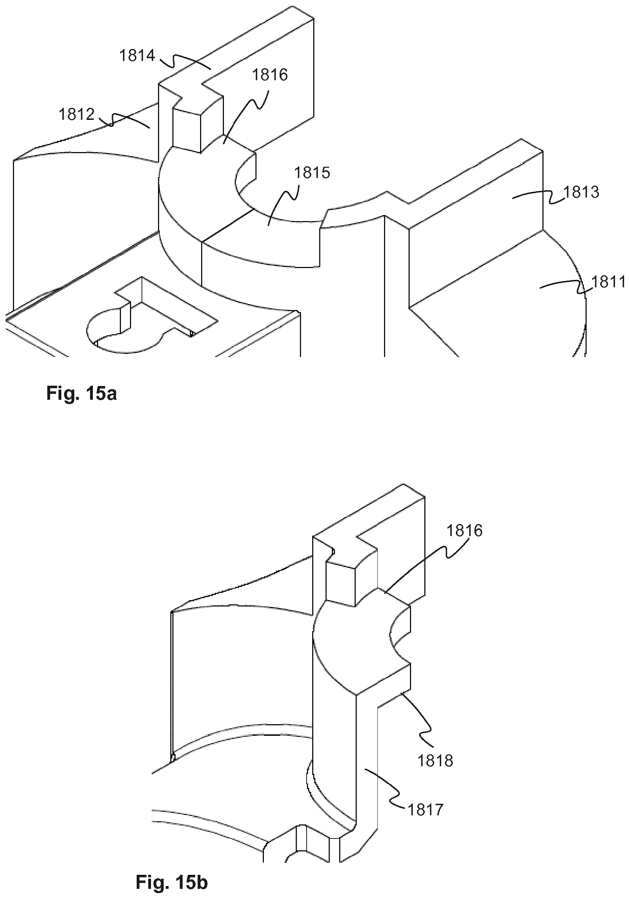

Figs 15a and 15b show in more detail the upper portion of the handle locking unit 1800, where the handle locking unit 1800 actually lock the handle shaft as described above.

It should be recognized that even if the description of the valve focuses on how to solve the problem with e.g. leakage, the valve can be used in any other application, e.g. aseptic and non-aseptic. The described embodiments of the valve provides manufacturing and cost advantages, assembling and operating advantages independent of the actual application of the valve. The valve may preferably be detachable in a way that it is easy to connect or remove the valve if it needs to be replaced, cleaned or fixed

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A valve for a bag-in-box system or a steel tank system comprising a separate main body (200; 1200) having a through hole (202), a valve member (302; 1302), which is configured to move between an open state and a closed state, a valve seat (303; 1303) against which the valve member (302; 1302) is configured to create a sealing in the closed state, and a handle unit (301; 1301) connected to the valve member (302; 1302) and configured to move the valve member (302; 1302) back and forth between the open state and the closed state, wherein the valve member (302; 1302) and the valve seat (303; 1303) are arranged within the through hole (202) of the main body (200; 1200), wherein the valve member (302; 1302) further comprises a front connector (100) being a substantially tubular hollow member having an axis of extension from a first end (102) to an opposing second end (104), wherein the first end (102) is configured to be connected to a filling or discharging coupling and the second end (104) is configured to be connected to the main body (200), **characterized in that** the front connector (100) comprises a locking shelf (101) configured to lock the handle unit (301).

2. The valve according to claim 1, wherein the handle unit (301; 1301) comprises a handle shaft (307; 1307) which, in an assembled state, is configured to extend through a centre cavity (304; 1304) of the valve member (302; 1302).

3. The valve according to claim 1 or 2, wherein the valve further comprises a handle locking unit (1800) configured to lock the handle unit (301; 1301).

4. The valve according to claim 3, wherein the handle locking unit (1800) comprises a locking portion (1818) which protrudes in a direction perpendicular to the extension of a handle shaft (1307) of the handle unit (1301), wherein the handle locking unit (1800) preferably comprises two semi-circle halves (1801, 1802) which are shaped to at least partly surround parts of the main body (200; 1200).

5. The valve according to any one of the preceding claims, wherein the main body (200; 1200) comprises a flow pipe (204; 1204) surrounding the through hole (202) and extending perpendicular from a backing plate (201; 1201) of the main body (200; 1200).

6. The valve according to claim 5, wherein the handle locking unit (1800) is configured to at least partly surround parts of the flow pipe (204) in an assembled state, wherein the flow pipe (204; 1204) preferably is connected to or integrated with a threaded section (1215) which is configured to be connected to a filling or discharge coupling.

7. The valve according to claim 1, wherein the front connector (100) comprises a first material and the main body (200) comprises a second material, wherein the first material is different from the second material, wherein the first material is preferably a heat resistant polymer.

8. The valve according to any of the claims 1 or 7, wherein the second opposing end (104) of the front connector (100) is provided with a means of releasably attaching the front connector (100) to the main body (200).

9. The valve according to claim 8, wherein the means of releasably attaching the front connector (100) to the main body (200) comprises at least one, laterally extending ear (105) provided with a through hole (108) arranged at an outer surface (106) of the front connector (100), wherein the main body (200) preferably further comprises receivable connectors (209) designed to match the laterally extending ear (105) of the front connector (100).

10. The valve according to claim 1, wherein the locking shelf (101) comprises a flat flange extending in a plane parallel with the axis of extension of the front connector (100) and two edge parts formed to partly fit around the handle unit (301) such that the handle unit (301) is fixed in place when the front connector (100) is connected to the main body (200).

11. The valve according to claim 1, wherein the flow pipe (204) is configured to be arranged within the tubular hollow front connector (100) such that, when the front connector and (100) and the main body (200) are connected, fluid passing through the main body (200) of the valve does not come in contact with the front connector (100).

12. The valve according to any one of the preceding claims, wherein the valve further comprises a detachable lid (500; 1500), wherein the lid (500; 1500) preferably has an inner face (502) provided with an inner sleeve (504) extending distally from the inner face (502) and concentric to the threaded region (503) such that when the lid is attached to the valve the inner sleeve (504) extends into the range of motion of the valve member (302; 1302).

13. The valve according to claim 12, wherein the valve is provided with a tamper proof latch (600) comprising an insertable male component (601) and two parallel opposed flanges (602, 603) for retaining the lid (500; 1500) arranged such that as the lid (500; 1500) is unscrewed from the valve, the two parallel opposed flanges (602, 603) are forced apart, and preferably wherein of the two parallel opposed flanges (602, 603), the flange (602) proximal to the male component (601) may be arranged at the valve and the flange (603) distal to the male component (601) may be arranged at the outer face (501) of the lid (500; 1500).

14. A bag-in-box system comprising a valve according to any of the preceding claims.

15. A steel tank system comprising a valve according to any of the claims 1-13.

16. A method for assembling a handle locking unit (1800) to a valve according to any of the claims 1-13, wherein the handle locking arrangement (1800) is configured to lock a handle unit (1301) to the valve and wherein the handle locking arrangement (1800) comprises a locking portion (1818) which protrudes in a direction perpendicular to the extension of a handle shaft (1307) of the handle unit (1301), and two semi-circle halves (1801, 1802) which are shaped to at least partly surround the main body (200; 1200), comprising the steps of:
- connecting the two halves (1801, 1802) of the handle locking unit,
- moving the handle locking unit on to the main body (1200),
- closing the two halves (1801, 1802) of the handle locking unit completely,
- placing the handle shaft (1307) in its intended location, and
- pushing the handle locking unit towards the handle shaft (1307) until the handle locking unit has locked the handle unit (1301) in its position.

## Patentansprüche

1. Ventil für ein Tasche-in-Box-System oder für ein Stahltanksystem, mit einem separaten Hauptkörper (200; 1200), der ein Durchgangsloch (202) aufweist, ein Ventilelement (302; 1302), das dazu ausgebildet ist, sich zwischen einem offenen Zustand und einem geschlossenen Zustand zu bewegen, einem Ventilsitz (303; 1303) gegen den das Ventilelement (302; 1302) zur Bildung einer Dichtung in dem geschlossenen Zustand ausgebildet ist, und einer Handhabungseinheit (301; 1301), die dazu ausgebildet ist, mit dem Ventilelement (302; 1302) verbunden zu werden und dazu ausgebildet ist, das Ventilelement (302; 1302) zwischen dem offenen Zustand und dem geschlossenen Zustand hin und her zu bewegen, wobei das Ventilelement (302; 1302) und der Ventilsitz (303; 1303) innerhalb des Durchgangsloches (202) des Hauptkörpers (200; 1200) angeordnet sind, wobei das Ventilelement (302; 1302) ferner einen vorderen Verbinder (100) aufweist, der im Wesentlichen ein rohrförmiges hohles Element ist, das eine Ausziehachse von einem ersten Ende (102) zu einem gegenüberliegenden zweiten Ende (104) aufweist, wobei das erste Ende (102) dazu ausgebildet ist, mit einer Kupplung zum Füllen oder Entladen verbunden zu werden, und wobei das zweite Ende (104) dazu ausgebildet ist, mit dem Hauptkörper (200) verbunden zu werden, **dadurch gekennzeichnet, dass** der vordere Verbinder (100) eine verriegelnde Platte (101) aufweist, die ausgebildet ist, mit der Handhabungseinheit (301) zu verriegeln.

2. Ventil nach Anspruch 1, bei dem die Handhabungseinheit (301; 1301) eine Handhabungswelle (307; 1307) aufweist, die in einem zusammengebauten Zustand dazu ausgebildet ist, sich durch einen mittleren Hohlraum (304; 1304) des Ventilelementes (302; 1302) zu erstrecken.

3. Ventil nach Anspruch 1 oder 2, bei dem das Ventil ferner einen Handhabungsverriegelungseinheit (1800) aufweist, die dazu ausgebildet ist, mit der Handhabungseinheit (301; 1301) zu verriegeln.

4. Ventil nach Anspruch 3, bei dem die Handhabungsverriegelungseinheit (1800) einen Verriegelungsbereich (1818) aufweist, der in einer Richtung senkrecht zu der Ausdehnungsrichtung einer Handhabungswelle (1307) der Handhabungseinheit (1301) vorsteht, wobei die Handhabungsverriegelungseinheit (1800) vorzugsweise zwei halbkreisförmige Hälften (1801, 1802) aufweist, die dazu geformt sind, wenigstens teilweise den Hauptkörper (200; 1200) zu umgeben.

5. Ventil nach irgendeinem der vorhergehenden Ansprüche, bei dem der Hauptkörper (200; 1200) ein Flussrohr (204; 1204) aufweist, das das Durchgangsloch (202) umgibt und sich senkrecht von einer Verstärkungsplatte (201; 1201) des Hauptkörpers (200; 1200) aus erstreckt.

6. Ventil nach Anspruch 5, bei dem die Handhabungsverriegelungseinheit (1800) dazu ausgebildet ist, wenigstens teilweise Teile des Flussrohrs (204) in einem zusammengebauten Zustand zu umgeben, wobei das Flussrohr (204; 1204) vorzugsweise mit einem Gewindeabschnitt (1215) verbunden ist oder damit einstückig ausgebildet ist, der dazu ausgebildet ist, mit einer Kupplung zum Füllen oder Entladen verbunden zu werden.

7. Ventil nach Anspruch 1, bei dem der vordere Verbinder (100) ein erstes Material aufweist, und der Hauptkörper (200) ein zweites Material aufweist, wobei das erste Material von dem zweiten Material abweicht, und wobei das erste Material vorzugsweise einen wärmebeständiges Polymer ist.

8. Ventil nach irgendeinem der Ansprüche 1 oder 7, bei dem das zweite gegenüberliegende Ende (104) des vorderen Verbinders (100) mit einem Mittel versehen ist, den vorderen Verbinder (100) an dem Hauptkörper (200) lösbar zu befestigen.

9. Ventil nach Anspruch 8, bei dem das Mittel zum lösbaren Befestigen des vorderen Verbinders (100) an dem Hauptkörper (200) wenigstens ein quer hervorstehendes Ohr (105) aufweist, das mit einem Durchgangsloch (108) versehen ist, das an einer Außenfläche (106) des vorderen Verbinders (100) angeordnet ist, wobei der Hauptkörper (200) vorzugsweise ferner aufnehmbare Verbinder (209) aufweist, die dazu ausgebildet sind, mit dem sich quer erstreckenden Ohr (105) des vorderen Verbinders (100) zusammenzuwirken.

10. Ventil nach Anspruch 1, bei dem die verriegelnde Platte (101) einen flachen Flansch aufweist, der sich einer Ebene parallel zu der Achse der Ausziehachse des vorderen Verbinders (100) erstreckt, und wobei zwei Randteile geformt sind, um teilweise um die Handhabungseinheit (301) derart zu umfassen, dass die Handhabungseinheit (301) am Ort fixiert ist, wenn der vordere Verbinder (100) mit dem Hauptkörper (200) verbunden ist.

11. Ventil nach Anspruch 1, bei dem das Flussrohr (204) dazu ausgebildet ist, innerhalb des rohrförmigen hohlen vorderen Verbinders (100) derart angeordnet zu sein, dass dann, wenn der vordere Verbinder (100) und der Hauptkörper (200) verbunden sind, Fluid, das durch den Hauptkörper (200) des Ventils gelangt, nicht in Kontakt mit dem vorderen Verbinder (100) kommt.

12. Ventil nach irgendeinem der vorhergehenden Ansprüche, bei dem das Ventil ferner einen abnehmbaren Deckel (500; 1500) aufweist, wobei der Deckel (500; 1500) vorzugsweise eine Innenfläche (502) aufweist, die mit einer inneren Hülse (504) versehen ist, die sich distal von der Innenfläche (502) und konzentrisch zu dem Gewindebereich (503) derart erstreckt, dass dann, wenn der Deckel auf dem Ventil befestigt ist, sich die innere Hülse (504) in den Bewegungsbereich des Ventilelementes (302; 1302) erstreckt.

13. Ventil nach Anspruch 12, bei dem das Ventil mit einer gegen Eingriffe gesicherten Lasche (600) versehen ist, die eine einführbare männliche Komponente (601) aufweist, sowie zwei parallele gegenüberliegende Flansche (602, 603), um den Deckel (500; 1500) derart zu halten, dass dann, wenn der Deckel (500; 1500) von dem Ventil abgeschraubt wird, die beiden parallelen gegenüberliegenden Flansche (602, 603) auseinander gedrückt werden, und wobei vorzugsweise die beiden parallelen gegenüberliegenden Flansche (602, 603), der Flansch (602) proximal zu der männlichen Komponente (601) an dem Ventil angeordnet werden kann und der Flansch (603), der distal zu der männlichen Komponente (601) ist, an der Außenfläche (501) des Deckels (500; 1500) angeordnet werden kann.

14. Tasche-in-Box-System mit einem Ventil nach irgendeinem der vorhergehenden Ansprüche.

15. Stahltanksystem mit einem Ventil nach irgendeinem der Ansprüche 1-13.

16. Verfahren zum Zusammenbauen einer Handhabungsverriegelungseinheit (1800) mit einem Ventil nach irgendeinem der Ansprüche 1-13, wobei die Handhabungsverriegelungsanordnung (1800) dazu ausgebildet ist, eine Handhabungseinheit (1301) mit dem Ventil zu verriegeln, und wobei die Handhabungsverriegelungsanordnung (1800) einen Verriegelungsbereich (1818) aufweist, der in einer Richtung senkrecht zu der Ausdehnungsrichtung einer Handhabungswelle (1307) der Handhabungseinheit (1301) hervorsteht, und mit zwei halbkreisförmigen Hälften (1801, 1802), die geformt sind, um den Hauptkörper (200; 1200) wenigstens teilweise zu umgeben, das die folgenden Schritte aufweist:
- Verbinden der beiden Hälften (1801, 1802) mit der Handhabungsverriegelungseinheit,
- Bewegen der Handhabungsverriegelungseinheit zu dem Hauptkörper (1200),
- vollständiges Verschließen der beiden Hälften (1801, 1802) der Handhabungsverriegelungseinheit,
- Platzieren der Handhabungswelle (1307) an ihrer gewünschten Position, und
- Drücken der Handhabungsverriegelungseinheit in Richtung auf die Handhabungswelle (1307), bis die Handhabungsverriegelungseinheit die Handhabungseinheit (1301) in ihrer Position verriegelt hat.

## Revendications

1. Valve pour un système de caisse-outre ou un système de cuve en acier comprenant un corps principal séparé (200; 1200) ayant un trou traversant (202), un organe de valve (302; 1302), qui est configuré pour se déplacer entre un état ouvert et un état fermé, un siège de valve (303; 1303) contre lequel l'organe de valve (302; 1302) est configuré pour créer une étanchéité dans l'état fermé, et une unité de poignée (301; 1301) raccordée à l'organe de valve (302; 1302) et configurée pour déplacer l'organe de valve (302; 1302) en arrière et en avant entre l'état ouvert et l'état fermé, dans laquelle l'organe de valve (302; 1302) et le siège de valve (303; 1303) sont agencés au sein du trou traversant (202) du corps principal (200; 1200), dans laquelle l'organe de valve (302; 1302) comprend en outre un raccord avant (100) qui est un organe creux sensiblement tubulaire ayant un axe d'extension d'une première extrémité (102) à une seconde extrémité (104) opposée, dans laquelle la première extrémité (102) est configurée pour être raccordée à un couplage de remplissage ou d'évacuation et la seconde extrémité (104) est configurée pour être raccordée au corps principal (200), **caractérisée en ce que** le raccord avant (100) comprend une clayette de verrouillage (101) configurée pour verrouiller l'unité de poignée (301).

2. Valve selon la revendication 1, dans laquelle l'unité de poignée (301; 1301) comprend une tige de poignée (307; 1307) qui, dans un état assemblé, est configurée pour s'étendre à travers une cavité de centre (304; 1304) de l'organe de valve (302; 1302).

3. Valve selon la revendication 1 ou 2, dans laquelle la valve comprend en outre une unité de verrouillage de poignée (1800) configurée pour verrouiller l'unité de poignée (301; 1301).

4. Valve selon la revendication 3, dans laquelle l'unité de verrouillage de poignée (1800) comprend une portion de verrouillage (1818) qui fait saillie dans une direction perpendiculaire à l'extension d'une tige de poignée (1307) de l'unité de poignée (1301), dans laquelle l'unité de verrouillage de poignée (1800) comprend de préférence deux moitiés en demi-cercle (1801, 1802) qui sont mises en forme pour entourer au moins partiellement des parties du corps principal (200; 1200).

5. Valve selon l'une quelconque des revendications précédentes, dans laquelle le corps principal (200; 1200) comprend un tuyau d'écoulement (204; 1204) entourant le trou traversant (202) et s'étendant perpendiculairement depuis une plaque de renfort (201; 1201) du corps principal (200; 1200).

6. Valve selon la revendication 5, dans laquelle l'unité de verrouillage de poignée (1800) est configurée pour entourer au moins partiellement des parties du tuyau d'écoulement (204) dans un état assemblé, dans laquelle le tuyau d'écoulement (204; 1204) est de préférence raccordé ou intégré à une section filetée (1215) qui est configurée pour être raccordée à un couplage de remplissage ou d'évacuation.

7. Valve selon la revendication 1, dans laquelle le raccord avant (100) comprend un premier matériau et le corps principal (200) comprend un second matériau, dans laquelle le premier matériau est différent du second matériau, dans laquelle le premier matériau est de préférence un polymère résistant à la chaleur.

8. Valve selon l'une quelconque des revendications 1 ou 7, dans laquelle la seconde extrémité (104) opposée du raccord avant (100) est pourvue d'un moyen permettant d'attacher de manière libérable le raccord avant (100) au corps principal (200).

9. Valve selon la revendication 8, dans laquelle le moyen permettant d'attacher de manière libérable le raccord avant (100) au corps principal (200) comprend au moins une oreille en extension latérale (105) pourvue d'un trou traversant (108) agencé au niveau d'une surface externe (106) du raccord avant (100), dans laquelle le corps principal (200) comprend en outre de préférence des raccords recevables (209) conçus pour concorder avec l'oreille en extension latérale (105) du raccord avant (100).

10. Valve selon la revendication 1, dans laquelle la clayette de verrouillage (101) comprend une bride plate s'étendant dans un plan parallèle à l'axe d'extension du raccord avant (100) et deux parties de bord formées pour s'adapter partiellement autour de l'unité de poignée (301) de sorte que l'unité de poignée (301) soit fixée en place lorsque le raccord avant (100) est raccordé au corps principal (200).

11. Valve selon la revendication 1, dans laquelle le tuyau d'écoulement (204) est configuré pour être agencé au sein du raccord avant creux tubulaire (100) de sorte que, lorsque le raccord avant (100) et le corps principal (200) sont raccordés, un fluide passant à travers le corps principal (200) de la valve n'entre pas en contact avec le raccord avant (100).

12. Valve selon l'une quelconque des revendications précédentes, dans laquelle la valve comprend en outre un couvercle détachable (500; 1500), dans laquelle le couvercle (500; 1500) a de préférence une face interne (502) pourvue d'un manchon interne (504) s'étendant distalement depuis la face interne (502) et concentrique à la région filetée (503) de sorte que, lorsque le couvercle est attaché à la valve, le manchon interne (504) s'étende dans la plage de mouvement de l'organe de valve (302; 1302).

13. Valve selon la revendication 12, dans laquelle la valve est pourvue d'un loquet d'inviolabilité (600) comprenant un composant mâle insérable (601) et deux brides opposées parallèles (602, 603) pour retenir le couvercle (500; 1500) agencées de sorte que, lorsque le couvercle (500; 1500) est dévissé de la valve, les deux brides opposées parallèles (602, 603) soient séparées par la force, et de préférence dans laquelle parmi les deux brides opposées parallèles (602, 603), la bride (602) proximale du composant mâle (601) peut être agencée au niveau de la valve et la bride (603) distale du composant mâle (601) peut être agencée au niveau de la face externe (501) du couvercle (500; 1500).

14. Système de caisse-outre comprenant une valve selon l'une quelconque des revendications précédentes.

15. Système de cuve en acier comprenant une valve selon l'une quelconque des revendications 1 à 13.

16. Procédé d'assemblage d'une unité de verrouillage de poignée (1800) à une valve selon l'une quelconque des revendications 1 à 13, dans lequel l'agencement de verrouillage de poignée (1800) est configuré pour verrouiller une unité de poignée (1301) à la valve et dans lequel l'agencement de verrouillage de poignée (1800) comprend une portion de verrouillage (1818) qui fait saillie dans une direction perpendiculaire à l'extension d'une tige de poignée (1307) de l'unité de poignée (1301), et deux moitiés en demi-cercle (1801, 1802) qui sont mises en forme pour entourer au moins partiellement le corps principal (200; 1200), comprenant les étapes de:
- raccordement des deux moitiés (1801, 1802) de l'unité de verrouillage de poignée,
- déplacement de l'unité de verrouillage de poignée sur le corps principal (1200),
- fermeture des deux moitiés (1801, 1802) de l'unité de verrouillage de poignée complètement,
- placement de la tige de poignée (1307) dans son emplacement souhaité, et
- poussée de l'unité de verrouillage de poignée vers la tige de poignée (1307) jusqu'à ce que l'unité de verrouillage de poignée ait verrouillé l'unité de poignée (1301) dans sa position.
